(19) Europäisches Patentamt
European Patent Office
Office européen des brevets

(11) **EP 2 157 799 A1**

(12) **EUROPEAN PATENT APPLICATION**

(43) Date of publication:
**24.02.2010 Bulletin 2010/08**

(51) Int Cl.:
**H04N 7/36** (2006.01)

(21) Application number: **08014651.7**

(22) Date of filing: **18.08.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Panasonic Corporation**<br>**Kadoma-shi**<br>**Osaka 571-8501 (JP)** | (72) Inventors:<br>• **Wittmann, Steffen**<br> **63225 Langen (DE)**<br>• **Narroschke, Matthias, Dr.**<br> **63225 Langen (DE)**<br><br>(74) Representative: **Grünecker, Kinkeldey,**<br>**Stockmair & Schwanhäusser**<br>**Anwaltssozietät**<br>**Leopoldstrasse 4**<br>**80802 München (DE)** |

(54) **Interpolation filter with local adaptation based on block edges in the reference frame**

(57)     The present invention relates to video encoding and decoding based on motion compensated prediction at fractional-pel resolution. According to this invention, interpolated pixel values at a certain sub-pel position are obtained by applying an interpolation filter that has been selected from a plurality of candidate filters on the basis of a distance between said sub-pel position and the next block boundary. In this manner, the plurality of candidate filters can be adapted for optimally interpolating pixels having a certain distance to the next block boundary. In addition, the type or strength of the boundary may be taken into account for selecting the most appropriate filter.

## Fig. 4

EP 2 157 799 A1

# EP 2 157 799 A1

**Description**

The present invention relates to video encoding and decoding, and in particular to a method for interpolating pixel values for a block-based video codec employing motion compensated prediction with fractional-pel resolution.

BACKGROUND OF THE INVENTION

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

All of these standards are based on hybrid video coding, which consists of the following main stages:

(a) Dividing each individual video frame into two-dimensional blocks of pixels in order to subject each video frame to data compression at a block level.

(b) Decorrelating spatiotemporal video information by applying a spatio-temporal prediction scheme to each block and by transforming the prediction error from the spatial domain into the frequency domain so as to obtain coefficients.

(c) Reducing the overall amount of data by quantizing the resulting coefficients.

(d) Compressing the remaining data by encoding the quantized coefficients and prediction parameters by means of an entropy coding algorithm.

Hence, state-of-the-art video standards employ a Differential Pulse Code Modulation (DPCM) approach which only transmits differences between blocks of an input video sequence and their predictions based on previously encoded blocks ("the locally decoded image"). One of the prediction schemes that may be employed by these video coding standards is motion compensated prediction. In this prediction scheme, at least one motion vector is determined for each block of video data in order to describe image displacements caused be object and/or camera movements. Based on the motion vectors determined, the image content of one block may be predicted at least to a certain extend from the image content of previously coded blocks. The difference between the predicted and the actual input image content is called the prediction error, which is then encoded together with the motion vectors rather than the actual input image content. In this manner, a substantial reduction in the amount of information to be coded can be achieved for most "natural" video sequences.

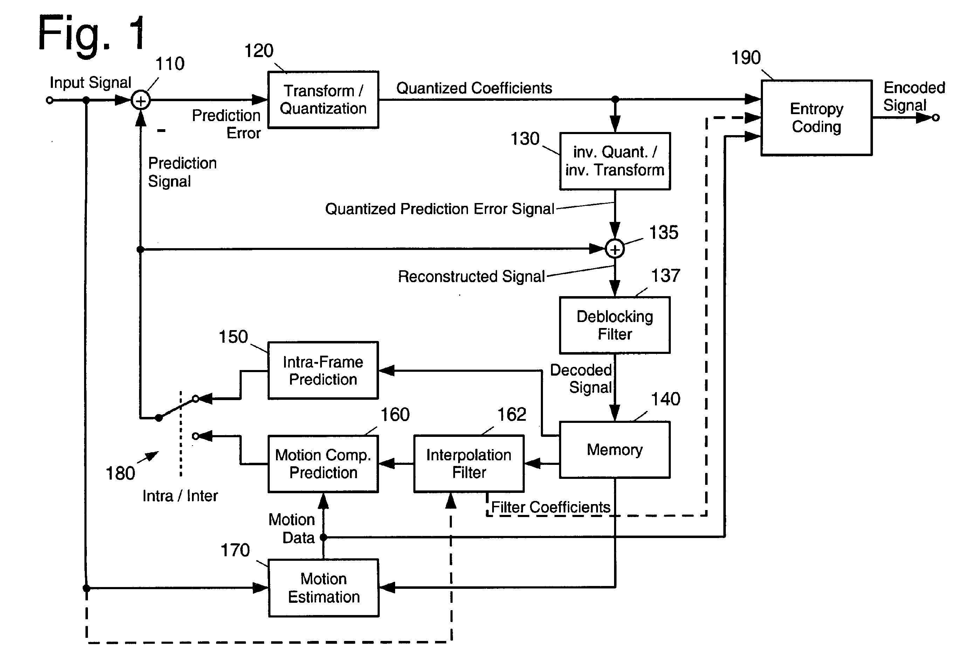

Figure 1 is an exemplary block diagram of a conventional video encoder, which is in accordance with the H.264 / AVC standard. The video encoder, generally denoted by reference numeral 100, comprises a subtractor 110 for determining differences between a current block of a video image (input signal) and a prediction signal of the current block which is based on previously encoded blocks ("the locally decoded image") stored in memory 140. The memory unit 140 thus operates as a delay unit that allows a comparison between current signal values and a prediction signal generated from previous signal values. A transformation and quantization unit 120 transforms the resulting prediction error from the spatial domain to the frequency domain and quantizes the obtained coefficients. An entropy coding unit 190 entropy encodes the quantized coefficients.

The locally decoded image is provided by a decoding unit incorporated into video encoder 100. The decoding unit performs the encoding steps in reverse manner. An inverse quantization and inverse transformation unit 130 dequantizes the quantized coefficients and applies an inverse transformation to the dequantized coefficients. In adder 135, the decoded differences are added to the prediction signal to form the reconstructed signal.

Due to the quantization, quantization noise is superposed to the reconstructed video signal. Due to the blockwise coding, the superposed noise often has a blocking characteristic, which may be subjectively annoying. In order to reduce the blocking characteristic, a deblocking filter 137 may be applied to every reconstructed macroblock. The deblocking filter is applied on the reconstructed signal, which is the sum of the prediction signal and the quantized prediction error signal. The deblocked signal is the decoded signal, which is generally displayed.

The deblocking filter in H.264/AVC has the capability of local adaptation. In the case of a high degree of blocking noise, a strong low pass filter is applied whereas for a low degree of blocking noise, a weak low pass filter is applied. The strength of the deblocking filter is determined based on the so-called boundary strength bS and on the gradient of pixel values across the boundary. The boundary strength bS is a parameter that is set in accordance with the manner in which the blocks p and q on both sides of the boundary are encoded, as indicated by the following Table 1.

Table 1

| bS = 4 | p or q is intra coded and boundary is a macroblock boundary |
|---|---|
| bS = 3 | p or q is intra coded and boundary is not a macroblock boundary |
| bS = 2 | neither p or q is intra coded; p or q contain coded coefficients |
| bS = 1 | neither p or q is intra coded; neither p or q contain coded coefficients; p and q have different reference frames or a different number of reference frames or different motion vector values |
| bS = 0 | neither p or q is intra coded; neither p or q contain coded coefficients; p and q have same reference frame and identical motion vectors |

As an example for deblocking at a block boundary, a linear deblocking filter with four coefficients is provided. This filter is applied to six adjacent input samples $p_2$, $p_1$, $p_0$, $q_0$, $q_1$ and $q_2$, wherein the boundary is located between $p_0$ and $q_0$. The filter output $p_{0,new}$ and $q_{0,new}$ is then defined as $p_{0,new} = (p_2 - (p_1 << 1) + (p_0 + q_0 + 1) >> 1) >> 1$ and $q_{0,new} = (q_2 - (q_1 << 1) + (q_0 + p_0 + 1) >> 1) >> 1$.

The type of prediction that is employed by video encoder 100 depends on whether the macro blocks are encoded in "Intra" or "inter" mode. In "Intra" mode the video encoding standard H.264/AVC uses a prediction scheme based on already encoded macro blocks of the same image in order to predict subsequent macro blocks. In "inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "inter" mode, a macro block is predicted from corresponding blocks of previous frames by employing motion compensated prediction. The estimation is accomplished by a motion estimator unit 170, receiving the current input signal and the locally decoded image. Motion estimation yields two-dimensional motion vectors, representing displacements between the current block and the corresponding block in already decoded frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within an already decoded frame where no pixel value is available, i.e. a sub-pel position. Hence, spatial interpolation of pixel values is needed in order to perform motion compensation. This is achieved by interpolation filter 162. According to the H.264/AVC standard, a 6-tap Wiener interpolation filter with fixed filter coefficients and a bilinear filter is applied in order to obtain pixel values for sub-pel positions.

Instead of the fixed interpolation filter of the H.264/AVC standard, adaptive interpolation filters may be employed in order to improve prediction accuracy. From reference WO 2006/108654 A2, for instance, a two-dimensional non-separable interpolation filter is known, which is independently calculated for each frame by minimizing the prediction error energy. For every fractional-pel position to be interpolated, an individual set of filter coefficients is determined on the encoder side and transmitted to the decoder as side information; cf. the dashed lines in Fig. 1.

For both the "Intra" and the "Inter" encoding mode, the differences between the current input signal and the prediction signal are transformed and quantized by a transformation/quantization unit 120 resulting in quantized coefficients. Generally, an orthogonal transformation such as a two-dimensional Discrete Cosine transformation (DCT) or an integer version thereof is employed.

The coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than high frequency components so that more bits are spent for coding the low frequency components than for the higher ones.

After quantization, the two-dimensional array of quantized coefficients has to be converted into a one-dimensional string to pass it to the entropy encoder. This conversion is done by scanning the array in a predetermined sequence. The thus obtained one-dimensional sequence of quantized coefficients is compressed and coded by an entropy coding unit 190 by means of a variable length code (VLC). The resulting bitstream is multiplexed with the motion information and stored on a recording medium or transmitted to the decoder side.

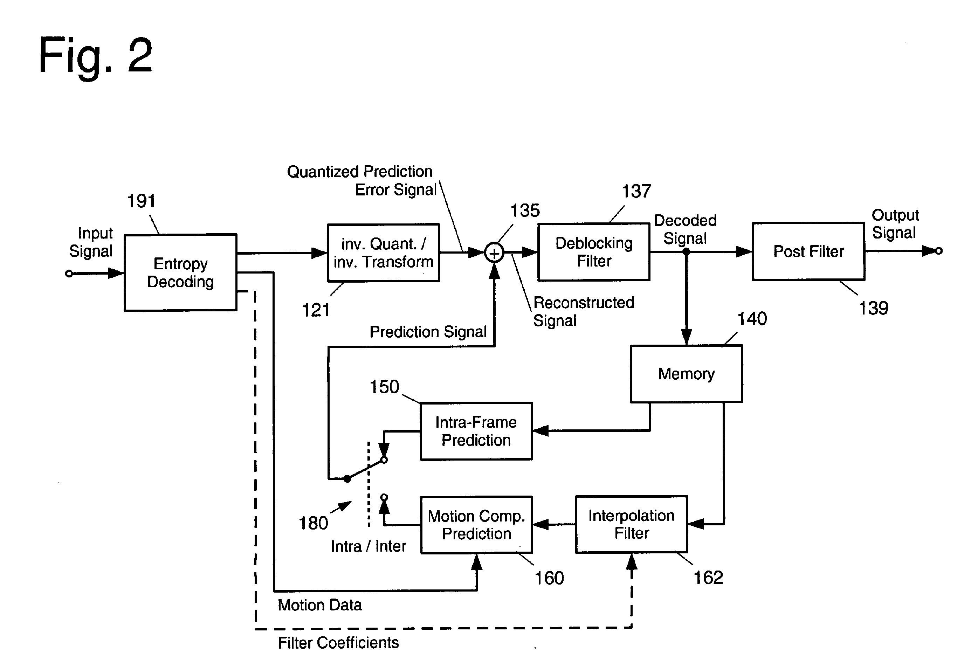

For reconstructing the encoded images at the decoder side, the encoding process is applied in reverse manner. A schematic block diagram, illustrating the configuration of the corresponding decoder, is shown in Fig. 2.

In decoder 101 of Fig. 2, first the entropy encoding of coefficients and motion data is reversed in an entropy decoding unit 191. This step also involves an inverse scanning in order to convert the string of decoded coefficients into a two-dimensional array of data as it is required for the inverse transformation. The decoded block of quantized coefficients is then submitted to an inverse quantizer and inverse transformation unit 121 and the decoded motion data is sent to a motion compensated prediction unit 160. Depending on the actual value of the motion vector, interpolation of pixel values may be needed in order to perform the motion compensated prediction. This interpolation is performed by interpolation filter 162. In case that adaptive interpolation filters are used, filter coefficients are also decoded by the entropy decoding unit 191 and fed into the interpolation filter 162; cf. the dashed line in Fig. 2.

The result of the inverse transformation is the quantized prediction error in the spatial domain, which is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the resulting decoded signal is stored in memory 140 to be applied to prediction units 150, 160.

With or without deblocking filtering, block boundaries are prone to disturbing blocking artefacts. Even worse, motion compensated prediction tends to proliferate these artefacts by copying image areas in the vicinity of a block boundary within the reference frame into the centre of a currently predicted block, depending on the value of the motion vector. This effect leads to a poor prediction accuracy and, hence, to a deterioration of coding efficiency.

## SUMMARY OF THE INVENTION

It is thus an aim of the present invention to provide an improved method for video encoding and decoding as well as a corresponding apparatus. It is a further aim of the present invention to provide an improved method for motion compensated prediction and an improved method for interpolating pixel values as it is required for motion compensated prediction at fractional-pel resolution.

This is achieved by the features as set forth in the independent claims.

Preferred embodiments are the subject matter of dependent claims.

It is the particular approach of the present invention to select the interpolation filter for interpolating pixel values at a certain position on the basis of the distance between this position and the next block boundary.

According to a first aspect of the present invention, a method for interpolating pixel values for a block-based video coder or decoder employing motion compensated prediction with fractional-pel resolution is provided. The method comprises the step of applying a selected one of a plurality of interpolation filters to the pixel values that are to be interpolated and is **characterized in that** the interpolation filter is selected on the basis of a horizontal distance between an image position for which an interpolated value is sought and a nearest vertical block boundary and/or a vertical distance between an image position for which an interpolated value is sought and a nearest horizontal block boundary.

Preferably, the inventive method further comprises the step of determining whether or not there is a block boundary within a predetermined horizontal distance and/or a predetermined vertical distance from an image position for which an interpolated value is sought, wherein the interpolation filter is selected on the basis of a result of the determining step. In this manner, the most appropriate interpolation filter may be selected depending on, for instance, whether there is a horizontal or vertical block boundary nearby or not.

Even more preferably, the predetermined horizontal distance and the predetermined vertical distance correspond to half the number of horizontal and vertical taps of the interpolation filters, respectively. The predetermined horizontal distance and the predetermined vertical distance may also be set to a value smaller than half the number of horizontal and vertical taps of the interpolation filters, respectively. In both cases, the interpolation filter may thus be selected on the basis of whether the filter support touches a block boundary or not, in other words, whether the filter taps are crossed by a block boundary or not.

Preferably, the inventive method further comprises the steps of determining a first horizontal distance between an image position for which an interpolated value is sought and a next vertical block boundary to the right; determining a second horizontal distance between an image position for which an interpolated value is sought and a next vertical block boundary to the left; determining a first vertical distance between an image position for which an interpolated value is sought and a next horizontal block boundary above; and determining a second vertical distance between an image position for which an interpolated value is sought and a next horizontal block boundary below. Hence, the interpolation filter may preferably be selected on the basis of the first horizontal distance, the second horizontal distance, the first vertical distance, and the second vertical distance. In this case, the most appropriate interpolation filter may be selected in accordance with the distances to the surrounding block boundaries. Alternatively, the interpolation filter may also be selected on the basis of the minimum of the first horizontal distance and the second horizontal distance, and the minimum of the first vertical distance and the second vertical distance. This is particularly advantageous if the interpolation filters are symmetric, for instance, if filter taps to the left are weighted by the same coefficients as corresponding filter taps to the right.

Preferably, the interpolation filter is further selected on the basis of coding parameters indicating how the block to the left and the block to the right of the vertical block boundary are encoded and/or coding parameters indicating how the block above and the block below the horizontal block boundary are encoded. More preferably, the coding parameters indicate whether the blocks are intra- or inter-coded, and/or whether the blocks belong to different slices or not, and/or whether the blocks belong to different macroblocks or not, and/or whether the blocks contain coded coefficients or not, and/or whether the blocks have a common reference frame or not, whether the blocks have identical motion vectors or not. Hence, the most appropriate interpolation filter may also be selected in accordance with the type of a nearby block boundary. Different interpolation filters may for instance be applied depending on whether the block boundary is a macroblock boundary or a block boundary within a macroblock. Said coding parameters may also provide an indication of the strength of the blocking artefacts that are to be expected at this particular boundary, such that the most appropriate interpolation filter may be selected accordingly. Said coding parameters may further provide an indication of whether the block above (to the left) or the block below (to the right of) the boundary has been encoded more faithfully such that interpolation may focus on pixel values on either side of the boundary in order to improve prediction accuracy.

Preferably, the interpolation filter is further selected on the basis of a gradient of pixel values across the vertical block boundary and/or a gradient of pixel values across the horizontal block boundary. The gradient may also provide some indication on the strength of blocking artefacts that occur at the block boundary such that the most appropriate interpolation filter may be selected. At a block boundary with pronounced blocking artefacts it may for instance be advantageous not to take any pixels from the other side of the boundary into account when computing the interpolated pixel, or to focus on pixels that are not directly adjacent to the boundary.

According to a further aspect of the present invention, a method for encoding and/or decoding a sequence of moving images is provided. Said method comprises the steps of partitioning each image of the sequence of moving images into a plurality of blocks in order to encode or decode the image on a block-by-block basis and applying motion compensated prediction in order to predict a block of the plurality of blocks from previously encoded or decoded blocks, wherein pixel values of the predicted block are obtained by employing a method for interpolating pixel values according to the first aspect of the present invention.

Preferably, the encoding method further comprises the step of adapting the plurality of interpolation filters to the sequence of moving images by minimizing prediction error energy. Specifically, the prediction error energy may be obtained by computing a difference between a predicted block and a corresponding block of the sequence of moving images to be encoded. In this manner, a set of optimum interpolation filters can be determined in accordance with the sequence of moving images to be encoded. An improved prediction accuracy may be achieved by performing motion compensated prediction on the basis of the optimum interpolation filters, resulting in an increase of overall coding efficiency.

Preferably, the result of the adaptation is signalled to the decoder side by encoding filter information indicating the adapted plurality of interpolation filters. The adapted interpolation filters may then be employed on the decoder side after decoding the filter information indicating the plurality of interpolation filters.

According to a further aspect of the present invention, a video encoder and a video decoder is provided that are adapted for encoding or decoding a sequence of moving images in accordance with the second aspect of the present invention.

Finally, a computer program product is provided that comprises a computer readable medium having computer readable program code embodied thereon, the program code being adapted for carrying out a method in accordance with the aspects of the present invention.

The above and other objects and features of the present invention will become more apparent from the following description and preferred embodiments given in conjunction with the accompanying drawings, in which:

Fig. 1 is a block diagram of a conventional video encoder;

Fig. 2 is a block diagram of a conventional video decoder;

Fig. 3 is a schematic illustration of a block of video data and the interpolation filters employed for motion compensated prediction;

Fig. 4 is a schematic illustration of a scheme for selecting interpolation filters in accordance with an embodiment of the present invention;

Fig. 5 is a schematic illustration of a scheme for selecting interpolation filters in accordance with a further embodiment of the present invention;

Fig. 6 is a schematic illustration of the selection of an interpolation filter on the basis of the location of a block boundary relative to the filter taps.

## DETAILED DESCRIPTION

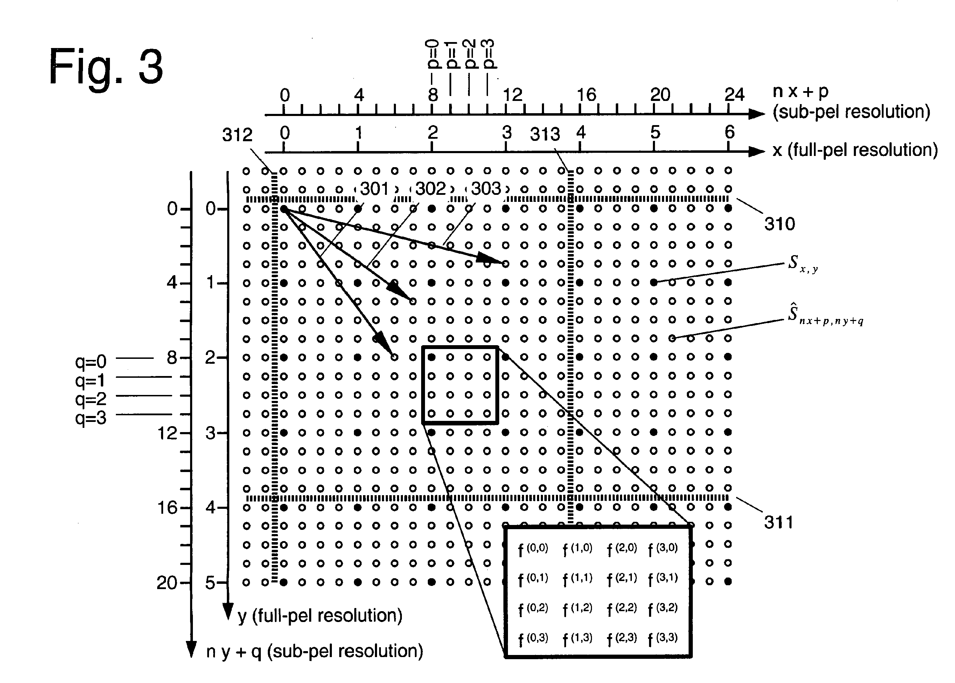

Fig. 3 is a schematic drawing of a block of video data. Filled circles denote full-pel positions, i.e. sampling points of the original image, whereas open circles indicate sub-pel positions, at which pixel values have to be interpolated. Although the following figures illustrate quarter-pel resolution, the present invention may be applied to any particular fractional-pel resolution, including half-pel, quarter-pel, eighth-pel, etc., and even different sub-pel resolutions in vertical and horizontal direction. Dashed lines 310-311 and 312-313 indicate horizontal and vertical block boundaries, respectively, namely boundaries of a 4-by-4 block. It is to be appreciated that the present invention can be applied to any block size, including 4-by-4, 8-by-4, 4-by-8, 8-by-8, 16-by-16, etc., as well as to combinations of different block sizes within one frame, as they may result from partitioning macroblocks independently of each other, in accordance with the H.264 standard.

In the following, $n$ will denote sub-pel resolution, i.e., $n$=2 for half-pel and $n$=4 for quarter-pel resolution, etc. Moreover, the original image (or block of video data) will be denoted by $S_{x,y}$, which is the pixel value at full-pel position $(x, y)$. The corresponding horizontally and vertically interpolated image will be denoted by $\hat{S}_{nx+p,ny+q}$. Here, sub-pel position is denoted by $p=0,...,n-1$ and $q=0,...,n-1$ ; cf. Fig. 3. Hence, the pixel at full-pel position $(nx,ny)$ in the interpolated image corresponds to pixel $(x, y)$ in the original image.

As explained above, conventional adaptive interpolation filters are defined individually for each sub-pel position $(p,q)$. Such a conventional adaptive interpolation filter may thus be defined as a linear operator $f^{(p,q)}$ mapping the original image to the corresponding horizontally and vertically interpolated image, viz.

$$\hat{S}_{nx+p,ny+q} = \sum_{i,j} f_{i,j}^{(p,q)} S_{x-i,y-j}. \qquad (1)$$

Here, $f_{i,j}^{(p,q)}$ are discrete filter coefficients for the interpolation filter with, for instance, $i$=-2,-1,0,1,2,3 and $j$=-2,-1,0,1,2,3 for a 6x6-tap filter. The set of points $(i, j)$ with non-zero filter coefficients $f_{i,j}^{(p,q)}$, e.g., the set of 6-by-6 pixels that affect the result of a 6x6-tap filter, is usually called filter support. Hence, the sum in Eq. (1) and in the following equations is supposed to run over the support of the filters involved.

Although conventional adaptive interpolation filters are defined individually for each sub-pel position, the very same interpolation filter is used to interpolate pixel values at a sub-pel position in the centre of a block and at a corresponding sub-pel position close to a boundary of the block. In a block-based video codec, however, this may be unfavourable, especially in the presence of marked blocking artefacts.

According to the present invention, this problem is resolved by taking the presence of block boundaries into account, for instance, by employing different interpolation filters for interpolating pixel values close to a block boundary and in a central portion of the block.

The most general approach for achieving this distinction is to employ separate interpolation filters for *each* pixel ($nx+p, ny+q$) of the interpolated image. An interpolation filter according to the present invention may thus be defined as a linear operator $f^{(x,y,p,q)}$ mapping the original image to the corresponding horizontally and vertically interpolated image, viz.

$$\hat{S}_{nx+p,ny+q} = \sum_{i,j} f_{i,j}^{(x,y,p,q)} S_{x-i,y-j}, \qquad (2)$$

wherein $f_{i,j}^{(x,y,p,q)}$ are discrete filter coefficients for the interpolation filter which do now depend on the current position ($nx+p, ny+q$) at sub-pel resolution in terms of $x$, $y$, $p$, and $q$.

Obviously, this approach will lead to an enormous number of filter coefficients that need to be transmitted to the decoder side. In order to reduce the signalling overhead to a reasonable amount, symmetries and invariances may be exploited. For instance, it is reasonable to assume that all interpolation filters (for a certain sub-pel position) within a central portion are identical, i.e.,

$$f_{i,j}^{(x,y,p,q)} = f_{i,j}^{(x',y',p,q)} .$$ 

(3)

The central portion of the block may, for example, be defined such that the filter taps do not "touch" the block boundary.

Further, interpolation filters for corresponding positions of different blocks should be identical, e.g.,

$$f_{i,j}^{(x,y,p,q)} = f_{i,j}^{(x \bmod N, y \bmod N, p, q)} ,$$ 

(4)

wherein a uniform partitioning of the image into blocks with size $N$x$N$ is assumed.

Hence, the dependency of the interpolation filter on the full-pel position $(x, y)$ should be alleviated by selecting for each full-pel position $(x, y)$ an interpolation filter $f_{i,j}^{(r,p,q)}$ from a limited set of interpolation filters $\left\{ f_{i,j}^{(0,p,q)}, \ldots, f_{i,j}^{(r_{max},p,q)} \right\}$. The interpolation filters are thus indexed by an index $r$, which may be a function of $x$ and $y$.

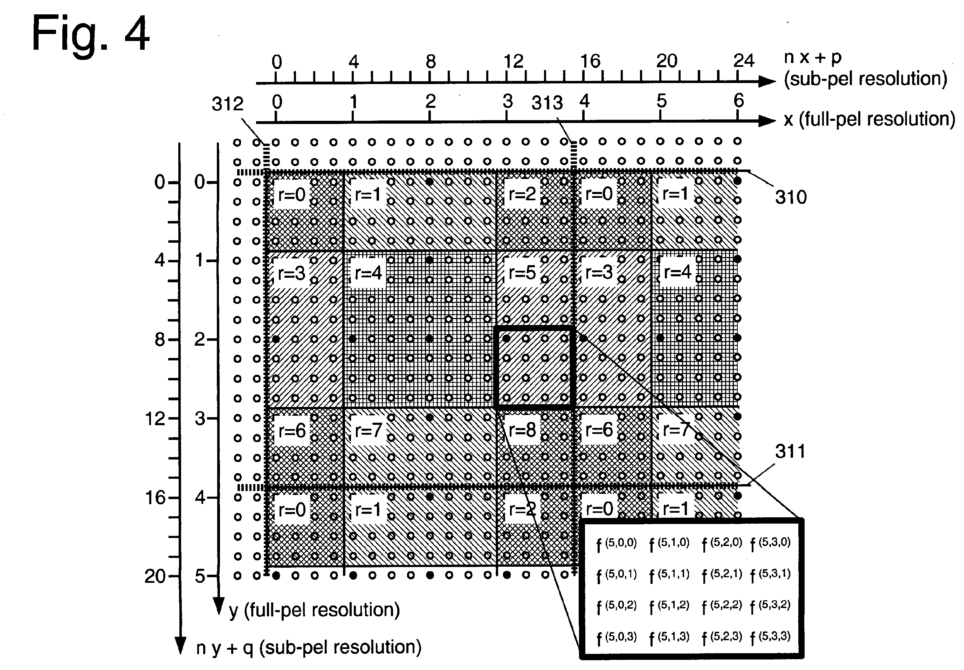

Fig. 4 shows an example for such an assignment of interpolation filters to different positions within a block. Here, a 4x4 block is partitioned into 9 domains $r=0,\ldots,8$. Within each domain r the same interpolation filter $f_{i,j}^{(r,p,q)}$ is used for obtaining an interpolation at the same sub-pel positions $(p,q)$. Obviously, the number and arrangement of the domains shown in Fig. 4 is by way of example only, so that more or fewer domains may be defined. It is also to be appreciated that even within one domain, in general, different filters are employed at different sub-pel positions.

The various domains shown in Fig. 4 are preferably defined in accordance with the size or support of the interpolation filter, i.e., the number of filter coefficients $f_{i,j}^{(r,p,q)}$ or taps used to define the interpolation filter. A 6x6-tap non-separable filter, for instance, is defined by 36 coefficients $f_{i,j}^{(r,p,q)}$ with $i=-2,-1,0,1,2,3$ and $j=-2,-1,0,1,2,3$. In this case, the interpolation value is determined from pixel values within a region of three pixels to the left, three pixels to the right, three pixels above, and three pixels below the current position.

The domains of Fig. 4 may, for instance, be defined such that an interpolation filter is selected on the basis of whether there is a block boundary within a certain distance of the interpolation position. This distance may preferably be set to half the number of horizontal or vertical filter taps. For a 6x6-tap filter, the distance may thus be set to 3. In this case, the interpolation filter is selected depending on whether the filter "touches" the block boundary or not. However, other distances may be used as well, especially distances smaller than half the number of horizontal or vertical filter taps. Pixel values at distances from the next block boundary greater than half the number of horizontal or vertical filter taps do no longer "feel" the block boundary and, hence, may be interpolated by a common interpolation filter, taking only the sub-pel positions $p$ and $q$ into account.

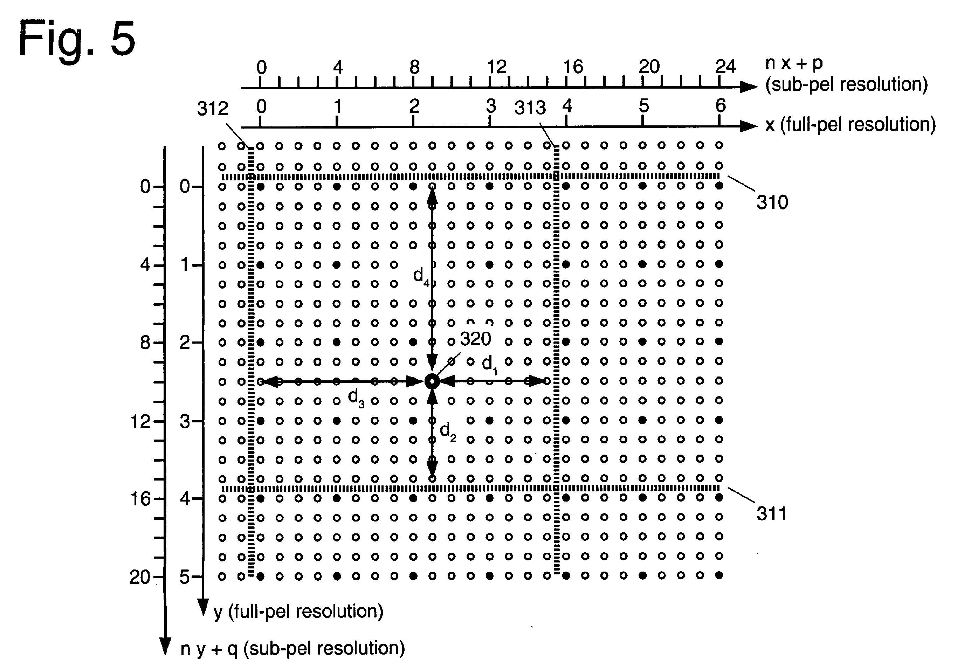

Fig. 5 shows another example for an assignment of interpolation filters to different positions within a block. According to this example, interpolation filters are selected on the basis of the distances $(d_1, d_2, d_3, d_4)$ of the position to be interpolated and the four block boundaries. Hence, $r$ is a multi-index $r=(d_1,d_2,d_3,d_4)$. It is to be appreciated that the very same interpolation filter may be selected for a plurality different positions within the block, for instance for all positions within the vertically and horizontally hatched region ($r=4$) in Fig. 4. This can be achieved by setting all distances larger than a certain maximum value $d_{max}$ to the maximum value, i.e., $r=(\min(d_1,d_{max}),\ldots,\min(d_4,d_{max}))$. Moreover, the interpolation filter may also be selected on the basis of the horizontal and/or vertical distance to the closest block boundary only, i.e., $r=\min(d_1,d_2,d_3,d_4)$ or $r=(\min(d_1,d_3),\min(d_2,d_4))$. It is further to be appreciated that the distances $(d_1,d_2,d_3,d_4)$ only need to be determined at full-pel accuracy since the interpolation filters are generally dependent on the sub-pel position anyway.

In addition to the distance between the position to be interpolated and one or more block boundaries, properties of the boundary itself may be taken into account. According to a preferred embodiment of the present invention, the boundary strength bS (cf. Table 1 above) may also be employed for selecting the most appropriate interpolation filter. In this case, the index $r$ also comprises an indication of the parameter bS, for instance by setting $r=(bS, d_1,d_2,d_3, d_4)$. In this manner, the interpolation filters may be set up such that certain pixels are neglected for obtaining the interpolated pixel if and only if they are separated by a "strong" boundary, for instance by a macroblock boundary. Moreover, the influence of certain pixels on the result of the interpolation may be selectively emphasized, depending on whether they belong to the current block or the neighbouring block and depending on which of these two blocks has been encoded more faithfully.

In the following, a method for adapting the interpolation filters for optimum motion compensated prediction is briefly explained. First of all, it is requested that each interpolation filter should yield the original pixel values at full-pel positions. Hence

$$f_{i,j}^{(r,0,0)} = \delta_{i,0} \cdot \delta_{j,0} \,, \tag{5}$$

with $\delta_{k,l}$ being the Kronecker-Delta, i.e. $\delta_{k,l}=1$ if $k=l$ and $\delta_{k,l}=0$ if $k \neq l$.

Referring again to Fig. 3, a displacement vector (301, 302, 303) will be denoted by $\vec{v}=(v_x, v_y)$. The components $v_x$ and $v_y$ refer to fractional-pel positions. A displacement vector (503) with $v_x$ mod $n=0$ is said to point to a full-pel position in x-direction (or to indicate a full-pel translation in x-direction). A displacement vector (501, 502) with $v_x$ mod $n=1,...,(n-1)$ is said to point to a sub-pel position in x-direction (or to indicate a sub-pel translation in x-direction). A similar terminology will be used for the y-direction.

Referring now in particular to Figs. 4 and 5, the filter coefficients $f_{i,j}^{(r,p,q)}$ of a certain filter class $r$ for a given sub-pel position $(p,q)$ are now determined as follows. Let $P_{x,y}$ denote the previously decoded reference image and $\vec{v}=(v_x, v_y)$ a displacement vector at sub-pel resolution that points to sub-pel position $(p, q)$, i.e., a displacement vector with $p=v_x$ mod $n$ and $q=v_y$ mod $n$. The energy of the prediction error for this displacement may thus be expressed as

$$\left(e_{p,q}\right)^2 = \sum_{x,y}\left(S_{x,y}-\sum_{i,j} f_{i,j}^{(r,p,q)} P_{\tilde{x}-i,\tilde{y}-j}\right)^2 \,, \tag{6}$$

with $\tilde{x}=x+[v_x/n]$ and $\tilde{y}=y+[v_y/n]$, wherein [...] denotes the floor operator that yields the largest integer smaller than the operator's argument (round-down operator). The sum over $x$ and $y$ is to be taken over that region of the original image for which the displacement vector is valid and to which an interpolation filter of class r is assigned. This region may correspond to a certain domain of the macro block, for which the displacement vector has been determined. The region may also consist of a (non-connected) union of some or all domains (of one or more video images) to which an interpolation filter of class $r$ is assigned and which have displacement vectors that point to the same sub-pel position, i.e., displacement vectors with $v_x$ mod $n=p$ and $v_y$ mod $n=q$.

The filter coefficients $f_{i,j}^{(r,p,q)}$ are now determined so as to minimize the prediction error energy of Eq. (6). The optimization may be performed by any numerical optimization algorithm known in the art, such as gradient descent, simulated annealing, etc. However, in the present case, the optimum filter coefficients may also be determined by solving a system of linear equations that results from computing the partial derivatives of Eq. (6) with respect to the filter coefficients $f_{i,j}^{(r,p,q)}$, viz.

$$0 = \frac{\partial}{\partial f_{k,l}^{(r,p,q)}} \sum_{x,y}\left(S_{x,y}-\sum_{i,j} f_{i,j}^{(r,p,q)} P_{\tilde{x}-i,\tilde{y}-j}\right)^2 =$$

$$= -2\sum_{x,y} P_{\tilde{x}-k,\tilde{y}-l}\left(S_{x,y}-\sum_{i,j} f_{i,j}^{(r,p,q)} P_{\tilde{x}-i,\tilde{y}-j}\right) \tag{7}$$

If the two-dimensional interpolation filter $f^{(r,p,q)}$ is separable, it may be rewritten as a composition of two separate one-dimensional filters $g^{(r,p,q)}$ and $h^{(r,p,q)}$ :

$$\hat{S}_{nx+p,ny+q} \;=\; \sum_j h_j^{(r,p,q)} \sum_i g_i^{(r,p,q)} S_{x-i,y-j} \tag{8}$$

with

$$g_i^{(r,0,0)} \;=\; \delta_{i,0} \text{ and } h_j^{(r,0,0)} \;=\; \delta_{j,0}\,.$$

It is generally assumed that the horizontal interpolation filter $g^{(r,p,q)}$ is independent of the vertical sub-pel position $q$, i.e., that $g^{(r,p,q)}=g^{(r,p)}$, and that the vertical interpolation filter does not affect the result of the interpolation on a full-pel row, i.e., that $h_j^{(r,p,0)} \;=\; \delta_{j,0}$. In this case, the two-dimensional interpolation can be considered as a two-step process: In a first step, horizontal interpolation is performed in order to determine pixel values at sub-pel positions on a "full-pel row". In a second step, pixel values on sub-pel rows are determined by applying vertical interpolation to pixel values determined in the first step. With these assumptions, filter coefficients for $g^{(r,p)}$ and $h^{(r,p,q)}$ can readily be determined from Eqs. (6) and/or (7). It may further be assumed that the vertical interpolation filter is independent of the horizontal sub-pel position $p$, i.e., that $h^{(r,p,q)}=h^{(r,q)}$. With this assumption, the total number of filter coefficients can be further reduced.

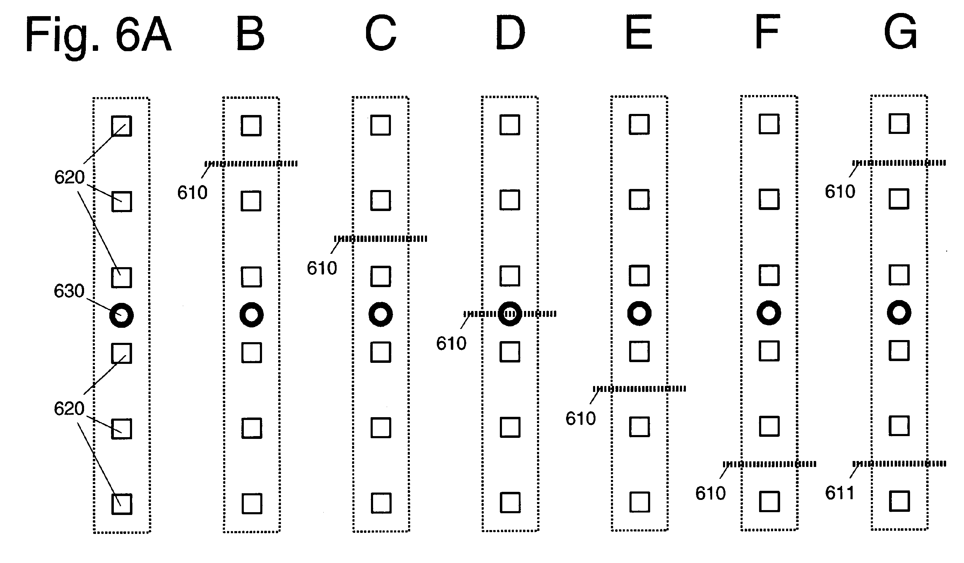

Fig. 6 is a schematic illustration of the selection of an interpolation filter on the basis of the location of a block boundary relative to the filter taps. The half-pel position to be interpolated is indicated by a circle 630, whereas full-pel positions on which the interpolation filter (here: 6-tap filter) operates are indicated by squares 620. Fig. 6A illustrates the situation in a central portion of a block, wherein filter taps do not cross a block boundary. Fig. 6B-F illustrate the five possible locations of the sub-pel position to be interpolated and the next block boundary 610. Finally, Fig. 6G illustrates the situation, wherein there are two block boundaries within the support of the interpolation filter. This situation may occur for small blocks, e.g., 4-by-4, and large filter support, that is, for "large" filters having a number of taps greater than the edge length of the block.

According to the present invention, a distinct interpolation filter is employed for each of the seven cases illustrated in Fig. 6. It is to be anticipated, however, that depending on the filter size, sub-pel resolution, and block size more or fewer distinct interpolation filters may be defined. Further, not necessarily all cases illustrated in Fig. 6 need to be handled by distinct interpolation filters. If the filter is assumed to be symmetric, for instance, the filters employed for cases B and C may be identical to those of cases F and E, respectively. In addition, the filter for case G may then be identical to the filters for cases B and F.

It is also to be appreciated that, for the sake of simplicity, only 1-dimensional examples are provided in Fig. 6. Although these 1-dimensional examples may be directly applied to the two 1-dimensional interpolation filters $g^{(r,p)}$ and $h^{(r,p,q)}$ in case of a separable interpolation filter, similar distinctions may also be made for (non-separable) 2-dimensional interpolation filters on the basis of the location of horizontal and/or vertical block boundaries relative to the filter support.

It is also to be appreciated that other distinctions on the basis of block boundaries may be made in order to select the most appropriate interpolation filter. Such distinctions may include

- No edge / at least one edge

- No edge / one edge / two edges

- No edge / edge in the center / other edges

- No edge / edge in the center / one edge at different position / two edges

- No edge / edge in the center / edges to the right (one edge) / edges to the left (one edge) / two edges

- No edge / edge in the center / edges to the right with distance of two pixels to the center / edges to the right with distance of one pixel to the center / edges to the left with distance of one pixel to the center / edges to the left with distance of two pixels to the center / two edges

- In case of symmetric filters: no edge / edge in the center / edges with distance of two pixels to the center / edges with distance of one pixel to the center

Other options and combinations thereof, especially combinations with parameters classifying the block boundary, such as the boundary strength bS, are also feasible.

Since transmitting the coefficients of adaptive filters may result in a high additional bit-rate, the overall coding gain can be reduced due to overhead information, especially for video sequences with small spatial resolution and in case of non-separable filters. In order to reduce the side information it may be assumed that statistical properties of an image are symmetric. Thus, the filter coefficients are taken to be equal in case the distance of the corresponding full-pel positions to the current sub-pel position are equal. However, due to artefacts in the signal like aliasing or due to displacement estimation errors, the symmetry assumption may not be valid for all sequences. Thus, this may lead to a loss of coding efficiency gains due to the limited adaptation of the filter to the signal statistics.

By applying symmetric and non-symmetric interpolation filters it is possible to control the amount of overhead information that is added to the bit-stream by transmitting filter coefficients. For instance for high resolution sequences it may be useful to transmit non-symmetric filters to achieve a optimal adaptation of the filter to the signal statistics, whereas for sequences with low resolution it may be necessary to apply symmetric filters in order to reduce the amount of overhead information. Each time symmetries are exploited, the corresponding filters at different sub-pel positions are jointly optimized. This may reduce the efficiency of the prediction in case of input signals containing aliasing or due to inaccurate motion estimation. It is to be noted, that switching between symmetric and non-symmetric filters can be performed in a sub-pel position dependent manner in order to optimize accuracy of motion compensated prediction versus signalling overhead.

Summarizing, the present invention relates to video encoding and decoding based on motion compensated prediction at fractional-pel resolution. According to this invention, interpolated pixel values at a certain sub-pel position are obtained by applying an interpolation filter that has been selected from a plurality of candidate filters on the basis of a distance between said sub-pel position and the next block boundary. In this manner, the plurality of candidate filters can be adapted for optimally interpolating pixels having a certain distance to the next block boundary. In addition, the type or strength of the boundary may be taken into account for selecting the most appropriate filter.

## Claims

1. A method for interpolating pixel values for a block-based video coder or decoder employing motion compensated prediction with fractional-pel resolution, said method comprising the step of:

   applying a selected one of a plurality of interpolation filters to the pixel values that are to be interpolated,

   **characterized in that**
   the interpolation filter is selected on the basis of a horizontal distance ($d_1$, $d_3$) between an image position (320; 630) for which an interpolated value is sought and a nearest vertical block boundary (312, 313) and/or a vertical distance ($d_2$, $d_4$) between an image position (320; 630) for which an interpolated value is sought and a nearest horizontal block boundary (310, 311).

2. A method according to claim 1, further comprising the step of
   determining whether or not there is a block boundary within a predetermined horizontal distance and/or a predetermined vertical distance from an image position (320; 630) for which an interpolated value is sought,
   wherein the interpolation filter is selected on the basis of a result of the determining step.

3. A method according to claim 1, further comprising the steps of:

   determining a first horizontal distance ($d_1$) between an image position (320; 630) for which an interpolated value is sought and a next vertical block boundary to the right (313);
   determining a second horizontal distance ($d_3$) between an image position (320; 630) for which an interpolated value is sought and a next vertical block boundary to the left (312);
   determining a first vertical distance ($d_4$) between an image position (320; 630) for which an interpolated value is sought and a next horizontal block boundary above (310); and
   determining a second vertical distance ($d_2$) between an image position (320; 630) for which an interpolated value is sought and a next horizontal block boundary below (311).

4. A method according to claim 3, wherein the interpolation filter is selected on the basis of the first horizontal distance

$(d_1)$, the second horizontal distance $(d_3)$, the first vertical distance $(d_4)$, and the second vertical distance $(d_2)$.

5. A method according to claim 3, wherein the interpolation filter is selected on the basis of the minimum of the first horizontal distance $(d_1)$ and the second horizontal distance $(d_3)$, and the minimum of the first vertical distance $(d_4)$ and the second vertical distance $(d_2)$.

6. A method according to any of claims 1 to 5, wherein the interpolation filter is further selected on the basis of coding parameters indicating how the block to the left and the block to the right of the vertical block boundary (312, 313) are encoded and/or coding parameters indicating how the block above and the block below the horizontal block boundary (310, 311) are encoded.

7. A method according to claim 6, wherein the coding parameters indicate whether the blocks are intra- or inter-coded, and/or whether the blocks belong to different slices or not, and/or whether the blocks belong to different macroblocks or not, and/or whether the blocks contain coded coefficients or not, and/or whether the blocks have a common reference frame or not, whether the blocks have identical motion vectors or not.

8. A method according to any of claims 1 to 7, wherein the interpolation filter is further selected on the basis of a gradient of pixel values across the vertical block boundary (312, 313) and/or a gradient of pixel values across the horizontal block boundary (310, 311).

9. A method for encoding and/or decoding a sequence of moving images, said method comprising the steps of:

   partitioning each image of the sequence of moving images into a plurality of blocks in order to encode or decode the image on a block-by-block basis; and
   applying motion compensated prediction in order to predict a block of the plurality of blocks from previously encoded or decoded blocks,

   wherein pixel values of the predicted block are obtained by employing a method for interpolating pixel values according to any of claims 1 to 8.

10. A method for encoding a sequence of moving images in accordance with claim 9, further comprising the step of adapting the plurality of interpolation filters to the sequence of moving images by minimizing prediction error energy.

11. A method according to claim 10, wherein the prediction error energy is obtained by computing a difference between a predicted block and a corresponding block of the sequence of moving images to be encoded.

12. A method according to claim 10 or 11, further comprising the step of encoding filter information indicating the adapted plurality of interpolation filters.

13. A method for decoding a sequence of moving images in accordance with claim 9, further comprising the step of decoding filter information indicating the plurality of interpolation filters.

14. An encoder or decoder apparatus that is adapted for encoding or decoding a sequence of moving images in accordance with the method of any of claims 9 to 13.

15. A computer program product comprising a computer readable medium having computer readable program code embodied thereon, the program code being adapted for carrying out all steps of any of claims 1 to 13.

# Fig. 1

Fig. 1

Input Signal — 110

Prediction Error — 120 Transform / Quantization — Quantized Coefficients — 190 Entropy Coding — Encoded Signal

Prediction Signal

130 inv. Quant. / inv. Transform

Quantized Prediction Error Signal — 135

Reconstructed Signal — 137 Deblocking Filter

Decoded Signal — 140 Memory

150 Intra-Frame Prediction

160 Motion Comp. Prediction — 162 Interpolation Filter

180 Intra / Inter — Filter Coefficients

Motion Data — 170 Motion Estimation

EP 2 157 799 A1

# Fig. 2

Input Signal → **Entropy Decoding** (191) → **inv. Quant. / inv. Transform** (121) → ⊕ (135) → **Deblocking Filter** (137) → **Post Filter** (139) → Output Signal

Quantized Prediction Error Signal

Decoded Signal

Reconstructed Signal

Prediction Signal

**Memory** (140)

**Intra-Frame Prediction** (150)

**Motion Comp. Prediction** (160)

**Interpolation Filter** (162)

180

Intra / Inter

Motion Data

Filter Coefficients

EP 2 157 799 A1

Fig. 3

EP 2 157 799 A1

# Fig. 4

EP 2 157 799 A1

Fig. 5

EP 2 157 799 A1

Fig. 6A B C D E F G

EP 2 157 799 A1

Europäisches
Patentamt

European
Patent Office

Office européen
des brevets

# EUROPEAN SEARCH REPORT

Application Number

EP 08 01 4651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 418 714 A (SARVER EDWIN J [US]) 23 May 1995 (1995-05-23) * column 2, line 22 - line 45 * * column 5, line 35 - line 58 * ----- | 1 | INV. H04N7/36 |
| A | WEDI T: "ADAPTIVE INTERPOLATION FILTER FOR MOTION COMPENSATED HYBRID VIDEO CODING" PROCEEDINGS OF THE PICTURE CODING SYMPOSIUM, XX, XX, 25 April 2001 (2001-04-25), pages 49-52, XP008068898 * the whole document * ----- | 1-15 | |
| A | JENSEN K ET AL: "SUBPIXEL EDGE LOCALIZATION AND THE INTERPOLATION OF STILL IMAGES" IEEE TRANSACTIONS ON IMAGE PROCESSING, IEEE SERVICE CENTER, PISCATAWAY, NJ, US, vol. 4, no. 3, 1 March 1995 (1995-03-01), pages 285-295, XP000501903 ISSN: 1057-7149 * page 292, right-hand column * ----- | 1-15 | TECHNICAL FIELDS SEARCHED (IPC) H04N |

The present search report has been drawn up for all claims

| Place of search | Date of completion of the search | Examiner |
|---|---|---|
| Berlin | 30 January 2009 | Raeymaekers, Peter |

EPO FORM 1503 03.82 (P04C01)

**EP 2 157 799 A1**

## ANNEX TO THE EUROPEAN SEARCH REPORT
## ON EUROPEAN PATENT APPLICATION NO.

EP 08 01 4651

This annex lists the patent family members relating to the patent documents cited in  the above-mentioned European search report.
The members are as contained in the European Patent Office EDP file on
The European Patent Office is in no way liable for these particulars which are merely given for the purpose of information.

30-01-2009

| Patent document cited in search report | Publication date | Patent family member(s) | Publication date |
|---|---|---|---|
| US 5418714 A | 23-05-1995 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006108654 A2